# EUROPEAN PATENT SPECIFICATION

(11) **EP 1 870 832 B1**
(45) Date of publication and mention of the grant of the patent: **30.09.2009**
(21) Application number: 06116012.3
(22) Date of filing: 23.06.2006
(51) Int. Cl.: G06F 21/20

(54) **Pairing to a wireless peripheral device at the lock-screen**
Paarung eines drahtlosen Peripheriegeräts bei Sperrschirm
Accouplement à un dispositif périphérique sans fil sur l'écran de fermeture

(43) Date of publication of application: 26.12.2007
(73) Proprietor: Research In Motion Limited, Waterloo, Ontario N2L 3W8 (CA)
(72) Inventor: Adams, Neil, Waterloo Ontario N2K 4E4 (CA); Little, Herb, Waterloo Ontario N2T 2V8 (CA); Sibley, Richard, Kitchener Ontario 3Z7 (CA)
(74) Representative: Moore, Barry

(56) References cited:
- EP-A- 1 596 538
- EP-A- 1 672 557
- US-A- 6 035 406
- US-A- 2003 199 267
- US-A1- 2002 090 912
- US-A1- 2004 192 206
- US-A1- 2005 044 372
- US-A1- 2006 135 064
- US-B1- 6 834 795

## Description

Wireless technology provides an easy way for a wide range of devices to communicate with each other and connect to the Internet without the need for wires, cables and connectors. Bluetooth® is an industrial standard for short-range wireless communications using radio frequency (RF) data transmission. Bluetooth® technology uses the portion of the RF spectrum near 2.4 GHz frequency that is reserved for industrial, scientific and medical devices. Bluetooth®-enabled devices are able to communicate without wires over an air-interface of up to 100 feet. Wireless technology is increasingly taking the place of direct communications links between personal computers and peripheral devices, such as printers and keyboards.

Peripheral devices that authenticate a user's identity may be used to enhance security for a personal computer. One example of such an authentication device is a smart card and smart card reader combination. Smart cards are devices that are compatible with personal authentication protocols as defined by the ISO7816 standard and its derivatives, published by the International Organization for Standardization. A smart card resembles a credit card in size and shape, but may also contain a microprocessor and memory. The smart card owner's identity and other personal information are stored in the smart card's memory, access to which is controlled by the microprocessor. The smart card may prevent unauthorized access to its memory by requiring that a secret such as a personal identification number (PIN) be supplied before allowing the access to proceed. Smart cards may be inserted into a smart card reader that is in communication with a computer. Only authorized users can completely boot up or unlock the computer by inserting their smart card into the smart card reader for authentication, and entering the correct PIN for the smart card. If the correct PIN is entered, the smart card then provides the computer with the PC user name and password that are stored on it, allowing access to the computer. Typically, authentication devices communicate with a personal computer using a wired connection, such as a USB connection.

EP1672557 describes an apparatus, method and program product which allow two factor token authentication in the presence of multiple tokens. When multiple tokens are detected, a user desiring access needs merely to provide a unique biometric identifier, referred to as a capture BIR, and that capture BIR is evaluated against a stored BIR associated with at least one of the tokens to determine if access is to be granted. If there is a match, that user is given access. If not, the capture BIR is evaluated against the stored BIR associated with another of the detected tokens. The process may repeat until either a match is found and the user is granted access, or none is found and access is denied. The foregoing occurs without the user having to input any user ID or the like and without the inconvenience or risk of error associated with selecting a user ID from a list of potential user ID's.

US6834795 describes a simplified user authentication to a computer resource utilizing a smart card. When a new user is issued a smart card, he or she is also issued a user name (ID) and password to be used during a first use to activate the smart card. The user then connects the smart card and enters the user ID and password. The user is authenticated using the user ID and password and identifying information from the smart card. The network administration server then requests a public key from the workstation. The workstation instructs the smart card to generate public and private keys. The public key is transmitted to the server. A digital certificate is created and the smart card is activated. Once the smart card is activated a simplified login procedure can be used wherein connecting the smart card to a workstation initiates a login process not requiring use of a PIN number or other user input.

US6035406 describes a method and system for simultaneously authenticating a user using two or more factors, such as both a password and a physical token or both a password and biometric information. The user presents a physical token including a storage device to a processor and attempts to log in using a first password; the processor includes a login service which receives the first password, accesses the storage device to transform the first password into a second password, and authenticates the second password using an operating system for the processor. The storage device includes encrypted information regarding the second password which can be relatively easily determined in response to the first password, but which cannot be relatively easily determined without the first password. The system or the storage device may also store information for biometric authentication of the user.

US2002/090912 relates to an application layer function outside the BLUETOOTH protocol which associates a BLUETOOTH unique address, i.e., the 48-bit unique BD_ADDR address, with a short passcode or PIN which is associated with a particular type of BLUETOOTH device in a particular piconet. The passcode or PIN can be pre-determined by the manufacturer of the BLUETOOTH device, or can be input and defined by the user. Upon installation in a piconet, a user can be asked to manually input a particular passcode or PIN into a relevant piconet device, and an inquiry can be broadcast to all communicating piconet devices and only those other piconet devices having a matching passcode or PIN associated therewith can automatically forward their respective 48-bit unique BD_ADDR addresses to the inquiring piconet device. Alternatively, a user can inquire and be provided with a list of available passcodes or PINs already established by other devices in the piconet, and select a particular passcode or PIN associated with one or more other piconet devices. The passcode or personal identification number (PIN) may be input upon electronic device setup (e.g., a four character code). The passcode or PIN may be numeric, text, or alphanumeric.

EP1596538 describes a method of pairing a first electronic device (30) and a second electronic device (1) in a radio communications system, comprising the steps of: bringing the first and second electronic devices in proximity to each other; transmitting an inquiry signal from said second electronic device; transmitting an inquiry response signal from said first electronic device, upon detecting said inquiry signal; initiating point-to-point connection between said first electronic device and said second electronic device, based on said first electronic device being the first device to respond to said inquiry signal. Preferably, said inquiry signal has an output power restricted to a first power level, which first power level is lower than a standard signal power level in said radio communications system.

US2004/192206 describes a method of revealing the device identity of a recipient Bluetooth device. When the recipient device is turned on, it displays the device identity. A user enters the device identity of the recipient device into a sending Bluetooth device in order to establish the initial communication link between the sending and recipient devices. Once the initial communication link is established, the devices are paired. It is no longer necessary to enter the device identity of the recipient device into the sending device in order to establis a further communication link. Furthermore, if the recipient device has already been turned on when the user wants to establish the initial communication link, the device identity is displayed when the user sends a message or signal from the sending device to the recipient device.

US2005/044372 describes a system and/or method that facilitates the installation and/or authentication of a device by invoking installation protocols and/or authentication protocols for a non-physical connection. A physical interface component provides a physical connection between at least one wireless device and at least one network entity in which the installation protocols and/or authentication protocols can be exchanged. The physical interface component can utilize a token key to establish multiple non-physical connections with multiple wireless devices. Additionally, the physical interface component can utilize a daisy chain scheme to install and/or authenticate a wireless device.

US2006/135064 describes a method and apparatus for a bonding process in a user terminal having a Bluetooth module. The method includes recognizing a barcode of a Bluetooth device to be connected using a camera module, acquiring bonding information of the Bluetooth device from the barcode, performing pairing with the Bluetooth device using the acquired bonding information, and establishing a connection between the user terminal and the Bluetooth device after performing pairing. The bonding information may also be acquired using a secure cable in another embodiment.

US2003/199627 discloses an information processing apparatus equipped with a first communication module having a wireless data communication capability, and a portable information apparatus equipped with a second communication module capable of forming a wireless communication link with the first communication module, and the information processing apparatus is configured so as to present a password entry screen only when the communication link is formed between the first and the second communication module. The first and second communication modules are Bluetooth-compatible communication modules. Unless the pre-registered portable information apparatus is located near the information processing apparatus, and unless the correct password is entered, the information processing apparatus does not start up the OS.

### GENERAL

A method is presented that allows pairing of a first wireless-enabled device such as a personal computer (PC) to a second wireless-enabled device while the first device is locked. For example, the first device and second device are Bluetooth® devices. A pairing interface on the locked first device allows a user to enter pairing information about the second device with which the first device does not currently have a wireless connection. The method comprises establishing a wireless connection between the first device and the second device using the pairing information; communicating with the second device over the wireless connection to authenticate the identity of a user of the first device; unlocking the first device if the user is authenticated as an authorized user of the first device; and if the first device is unlocked by the authorized user within a predetermined time interval after the connection is established, storing in a device profile on the first device at least a portion of the pairing information about the second device. This method provides for a wireless authentication device to be paired to a locked PC. Alternatively, the same method may be used to allow pairing of a peripheral wireless device to a mobile device, such as a personal digital assistant (PDA), while the mobile device is locked.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a schematic diagram of an exemplary system with an authentication device comprising a smart card reader and smart card, according to some embodiments of the invention;

Figure 2 is a flowchart showing an exemplary method of unlocking a protected multi-user device using a wireless authentication device;

Figure 3 is a flowchart showing an exemplary method of pairing with a wireless authentication device from the lock-screen of a protected device;

Figure 4 is a flowchart showing an exemplary method of unlocking a protected single-user device using a wireless authentication device;

Figure 5 is a block diagram of an exemplary system, according to some embodiments of the invention; and

Figure 6 is a block diagram of an exemplary system based on a Microsoft Windows@ operating system, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILED DESCRIPTION

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

Typically, authentication devices communicate with a personal computer (PC) using a wired connection. An authentication device that communicates with the PC solely using a wireless communication protocol such as Bluetooth® (BT) has recently been proposed.

Most personal computers do not provide a mechanism to form a wireless connection with a peripheral device while the computer is locked. In general, this is a good idea, because it prevents an attacker from connecting a second device to a PC without knowing an authorized user name and password for the PC. However, when a wireless authentication device is in use, a situation may arise in which it would be desirable to form a wireless connection from the PC's lock-screen. For example, when the user gets a new authentication device, or when the pairing keys for the connection to the authentication device are lost, a "Catch-22" arises where the computer must be unlocked to pair to the authentication device, but the computer may not be unlocked until the authentication device is paired to it.

The same problem may arise when a wireless authentication device is used to protect a handheld mobile communications device, or with any other device that communicates wirelessly with the authentication device and that does not typically allow pairing when locked.

This problem may be solved by enabling a user of the protected device to establish a wireless pairing from the lock-screen. To accomplish this, any manner of *pairing interface* may be provided that allows a user of the protected device to enter the information required to pair to a second wireless-enabled device without requiring the user to first unlock the protected device. For example, software may be written for the protected device that creates dialog boxes on a PC monitor or messages on the display of a handheld device. The dialog boxes (or messages) and a user input interface (typically a keyboard or a keypad) together comprise an example of a pairing interface. Alternatively, a pairing interface may comprise a bar code reader, or any other device that allows the user to input the relevant pairing information.

In an exemplary embodiment in a multi-user PC that may connect to one of several smart card readers, it is necessary to first identify which smart card reader should be connected to. To accomplish this, a *device dialog box* may be displayed on the lock-screen, into which a user may enter a *device name.* The device dialog box may be displayed continually while the PC is locked, or may be displayed as a result of a keyed sequence from a user input interface or as a result of some other initiating sequence. The device name may be an informal and easy-to-remember nickname for the user's authentication device. The device name may be as simple as the name of the device's owner, for example "Jane Smith", or it may be the device owner's PC user name. When a user enters a device name into the device dialog box, a *pairing dialog box* may then be displayed that allows the user to enter information essential for pairing (for example a BT address or other information that identifies the device for pairing, and, if needed, a secret from which the BT pairing keys are created).

After BT pairing keys are created and an initial connection with the authentication device is established, the device name may be used to label a device profile stored on the PC. The device profile may include the pairing information for the device that was entered in the device and pairing dialog boxes, allowing quick connection to the device in future. Thereafter, the user would only need to supply the device name in the device dialog box, and a connection could be established by reading the pairing information from the corresponding device profile. The device profiles may be stored in a file, or registry, which is only modifiable by a user with system administrator privileges. Regular users would not have access to the device profiles, nor would they be permitted to modify them directly.

At the time of the initial device pairing, it is not possible to verify that the device name entered is actually a correct match for the device that is specified in the pairing dialog box. This opens up the following security attack:
(1) From the lock-screen, an attacker (the Attacker) enters in the device dialog box a device name that corresponds to another user's, e.g. Jane Smith's, authorization device. For example, if the authorization device is a smart card reader, the Attacker enters the device name for Jane Smith's smart card reader, which may be, simply, "jsmith". The PC then displays a pairing dialog box, prompting the Attacker for pairing information about the device. Instead of entering information corresponding to Jane Smith's smart card reader, the Attacker enters information corresponding to his own smart card reader.
(2) The PC then prompts the Attacker for a secret from the specified authorization device, which once entered, allows the PC and the specified authorization device to generate the BT pairing keys and thus allows the PC to pair with the Attacker's own smart card reader.
(3) Once the PC and the Attacker's smart card reader are paired, if the Attacker's smart card is inserted into his smart card reader, the PC prompts the Attacker to enter a smart card PIN. If the smart card PIN entered corresponds to what is stored on the Attacker's smart card, (verified, for example, using a challenge-response), and the Attacker is an authorized user of the PC, then the Attacker is logged into the computer under his own computer account. If the Attacker is not an authorized user of the PC, he will not be logged in.
(4) The PC stores the pairing information and BT pairing keys corresponding to the Attacker's smart card reader in a device profile labeled incorrectly with Jane Smith's device name.
(5) The Attacker locks the computer and waits within wireless range of the PC with his smart card reader.
(6) When Jane Smith returns to the lock-screen, Jane enters the device name of her smart card reader in the device dialog box. Now, however, Jane's device name corresponds to the Attacker's smart card reader in the device profile. Instead of connecting to Jane's smart card reader, the PC connects to the Attacker's smart card reader which is waiting nearby.
(7) Jane is prompted by the PC to enter a smart card PIN. Jane enters her own smart card PIN, which, when entered, is captured by the Attacker's smart card reader. The Attacker now has Jane's smart card PIN, which was the point of the attack. In this example, the Attacker's smart card reader may be running software that captures the password. Alternatively, the Attacker may use any device that mimics a smart card reader when communicating with the PC, including his own laptop or a handheld mobile device. Jane is unable to login to the computer because her smart card PIN is rejected by the Attacker's smart card.

By applying some security rules defining when a device profile may be generated, the attack described above may be prevented. For example, rules may be applied that prevent an Attacker from mapping a different user's device name to the Attacker's device in a device profile. The following two rules are an example: (1) After the initial wireless pairing with an authentication device, a user is required to log into the PC within a very short period of time. This period of time should be short enough to prevent a second user from assuming control of the PC and logging in; (2) The user name for the PC login must match the device name that was entered in the device dialog box. In a practical implementation of these rules, if a successful PC login occurs before the timeout expires, a device profile is created, or edited, using the PC login name as the label, and the device profile includes the pairing information that was entered in the dialog boxes. If no successful PC login occurs before the timeout expires, the connection with the authentication device is dropped, and no new device profile is created.

In a single-user PC, it is likely that only one authentication device need be connected to. In this scenario, there is no requirement for the user to enter a device name to identify the device. Instead, from the lock-screen, a user may simply enter their smart card PIN as is customary. If no authentication device is connected, the PC will look for a device profile. If no device profile is found, or if the PC is unable to successfully connect to a SCR within a timeout period using the information stored in the device profile, a pairing interface may be used to establish a connection with an authentication device. Once a connection is established, if the PIN is verified correct by the SCR, and the PC verifies that the user name and password that are on the SC are correct, a device profile may be stored. Handheld mobile communications devices and the like typically have a single user, and may therefore also benefit from using this method.

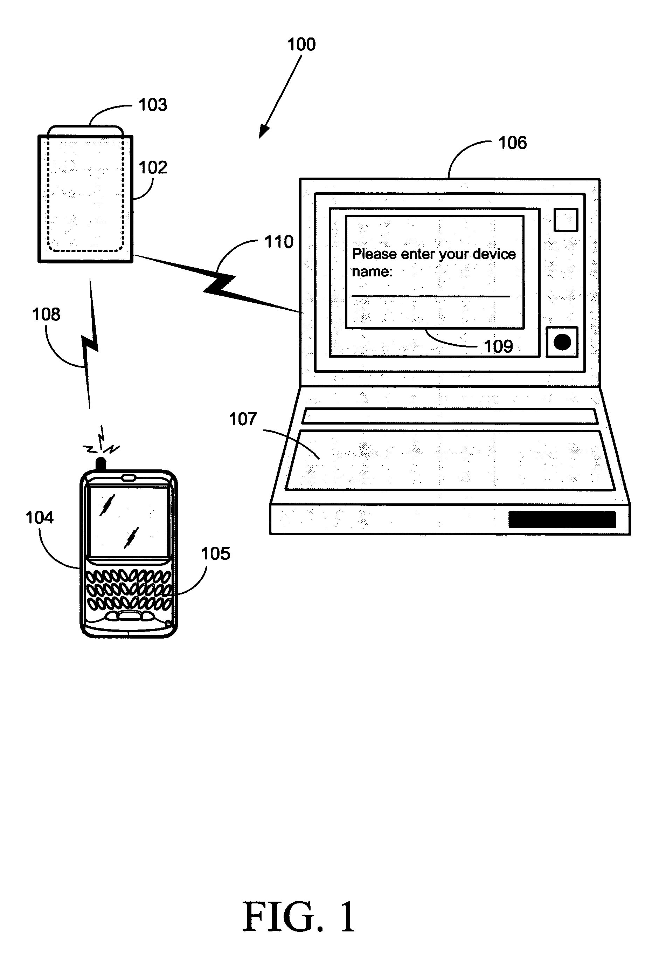

Figure 1 is a schematic diagram of an exemplary system which includes an authentication device comprising a smart card reader and smart card, according to some embodiments of the invention. A system 100 includes a personal computer 106, a smart card reader 102, and a mobile device 104. A smart card 103 is shown inserted into smart card reader 102. Personal authentication may be desired for personal computer 106 and/or mobile device 104. Personal computer 106 and smart card reader 102 may communicate by a Bluetooth® wireless communication link 110. Likewise, mobile device 104 and smart card reader 102 may communicate by a Bluetooth® wireless communication link 108. In this description and the claims, a wireless communication link may include one or more wired portions and/or one or more optical portions.

Personal computer 106 includes a user input interface 107, and mobile device 104 includes a user input interface 105. An exemplary device dialog box 109 is shown on a display of personal computer 106. The device dialog box includes a prompt for a device name for an authorization device. A user may enter a device name into the device dialog box through user interface 107.

A non-exhaustive list of examples for personal computer 106 includes any of the following: notebook computers, laptop computers, desktop personal computers and the like. A non-exhaustive list of examples for mobile device 104 includes any of the following wireless computerized devices: personal digital assistants (PDAs), handheld computers, smart phones, cellular telephones, MP3 players, and the like.

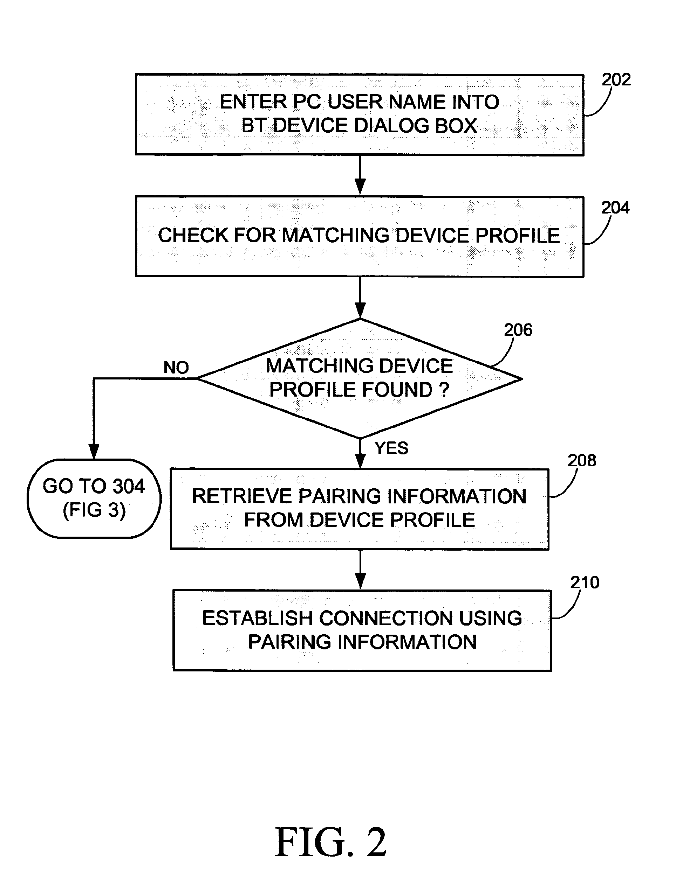

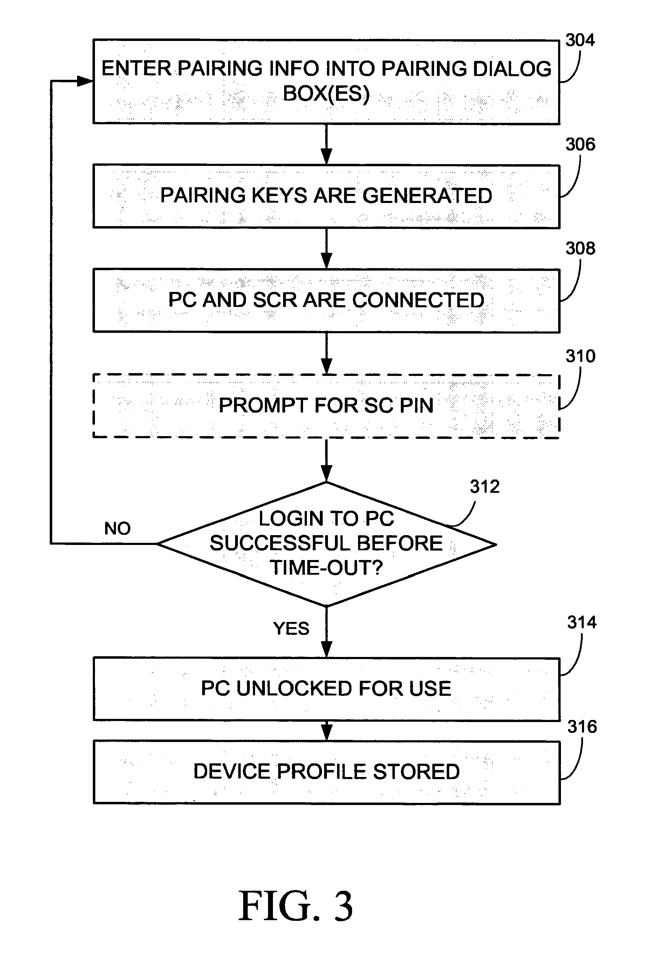

Figure 2 is a flowchart showing an exemplary method of unlocking a multi-user PC using a BT authentication device. At 202, a user enters his/her PC user name in a device dialog box that is displayed on the lock-screen of the PC. At 204, the PC user name is checked against all the existing device profiles to see if a corresponding device profile exists. At 206, if no such device profile is found, the method of Figure 3 may be followed to create a new device profile labeled with that PC user name. If, however, a matching device profile is found, then at 208, at least a portion of the pairing information for the device required to establish a connection will be retrieved from the device profile. At 210, the pairing information is used to establish a wireless connection between the PC and the device described in the device profile.

Figure 3 is a flowchart showing an exemplary method of connecting with a wireless smart card reader from the lock-screen of a PC. At 304, a pairing dialog box (or boxes) is displayed on the lock-screen. The user enters pairing information into the pairing dialog box, for example, information identifying the device (device ID) such as a Bluetooth® address corresponding to the SCR, and a secret from which the BT pairing keys are generated. This information is required for pairing the PC with the device. The user may also input additional information that may be used to generate additional secure pairing keys, if an additional layer of security measures are imposed at the BT application level. At 306, pairing keys for pairing the two devices are generated. These may include the standard BT pairing keys, and any additional keys related to additional security measures that are imposed at the BT application level. At 308, the PC and the SCR are paired and a connection is established, allowing the SCR to be used for authentication of a user of the PC. At 310, the PC prompts for the user to enter a smart card PIN. o log into the PC, the user inserts a smart card into the smart card reader, and enters the smart card's PIN. The PC then authenticates the user before allowing access to the PC. At 312, if the user has not attempted to login to the PC after a predetermined time interval, or if the login attempt is not successful, no new device profile is created, and the PC remains locked. If the login is successful, then at 314, the PC is unlocked for use. At 316, a device profile is created (or edited). The device profile is labeled using the PC user name used at login, and includes at least a portion of the pairing information entered at 304 and may also include any or all of the pairing keys created at 306. According to this method, it would not be possible for an attacker to map their SCR (or other device) to the user name and profile of another user without being able to login to the PC as the other user. This would require the attacker to already know the other user's smart card PIN.

In this flowchart, mobile device 104, or any other device that can communicate wirelessly with smart card reader 102 and has a lock-screen, could take the place of personal computer 106.

Computer-executable instructions for connecting to a wireless device from the lock-screen according to the above-described method may be stored on a form of computer readable media. Computer readable media includes volatile and nonvolatile, removable and non-removable media implemented in any method or technology for storage of information such as computer readable instructions, data structures, program modules or other data. Computer readable media includes, but is not limited to, random access memory (RAM), read-only memory (ROM), electrically erasable programmable ROM (EEPROM), flash memory or other memory technology, compact disk ROM (CD-ROM), digital versatile disks (DVD) or other optical storage, magnetic cassettes, magnetic tape, magnetic disk storage or other magnetic storage devices, or any other medium which can be used to store the desired instructions and which can be accessed by device 304, including by internet or other computer network forms of access.

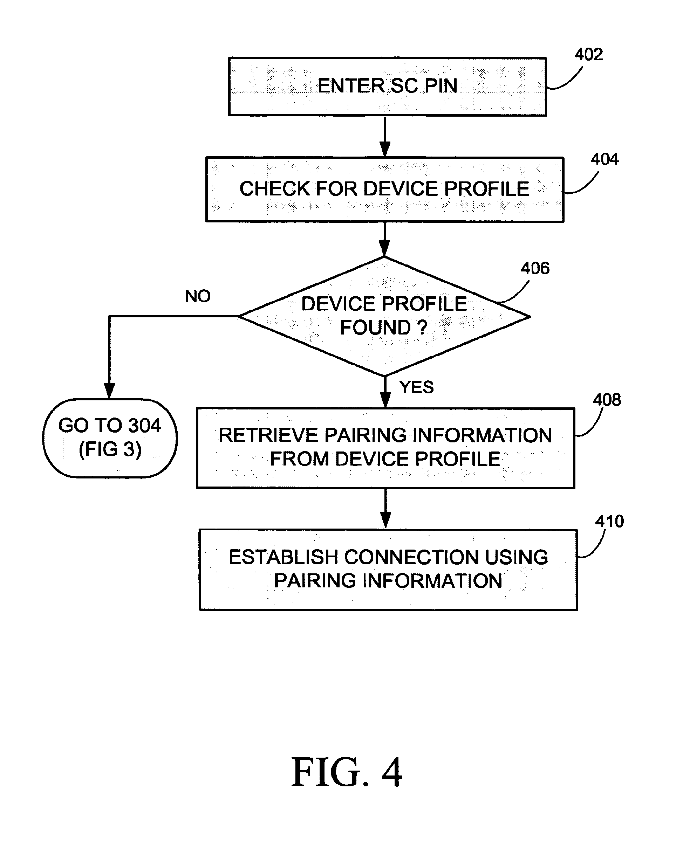

Figure 4 is a flowchart showing an exemplary method of unlocking a single-user PC using a BT authentication device. At 402, a user enters a smart card PIN in a dialog box that is displayed on the lock-screen of the PC. At 404, the PC checks for a stored device profile. At 406, if no device profile is found, the method of Figure 3 may be followed to create a new device profile. 310 may be skipped, and at 316 there is no need to label the sole device profile. If, however, a device profile is found, then at 408, at least a portion of the pairing information for the device required to establish a connection will be retrieved from the device profile. At 410, the pairing information is used to establish a wireless connection between the PC and the device described in the device profile.

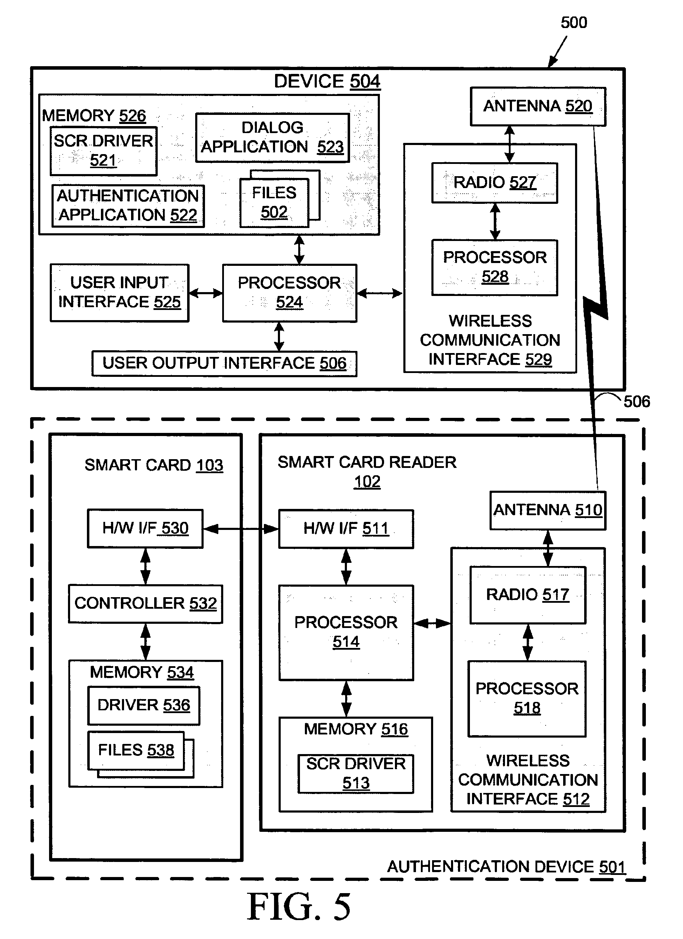

Figure 5 is a block diagram of an exemplary system 500, according to some embodiments of the invention. System 500 includes a device 504 and an authentication device 501 that includes smart card reader 102 and smart card 103. Device 504 and smart card reader 102 are able to communicate over a wireless communication link 506, and smart card 103 is in direct communication with smart card reader 102. Personal computer 106 and mobile device 104 are examples of device 504.

Device 504 includes an antenna 520, a wireless communication interface 529, a processor 524 coupled to wireless communication interface 529, and a memory 526 coupled to processor 524. Device 504 also includes a user input interface 525 coupled to processor 524 and a user output interface 506 coupled to processor 524. Processor 524 and memory 526 may be part of the same integrated circuit or in separate integrated circuits. Wireless communication interface 529 includes a radio 527 coupled to antenna 520, and a processor 528 coupled to radio 527. Wireless communication interface 529 and processor 524 may be part of the same integrated circuit or in separate integrated circuits. A non-exhaustive list of examples for user input interface 525 includes a touch screen, a keyboard, a track ball, a microphone, and the like. A non-exhaustive list of examples for user output interface 526 includes a display, a touch screen, a speaker, and the like.

Memory 526 may be fixed in or removable from device 504. Memory 526 may be embedded or partially embedded in processor 524. Memory 526 may store executable code 523 which, when executed by processor 524, runs a computer application that creates user-input dialog boxes that are displayed on the lock-screen while device 504 is locked. Memory 526 may also store executable code 521 which, when executed by processor 524, runs a smart card reader driver application. Memory 526 may also store executable code 522 which, when executed by processor 524, runs a user authentication application that verifies that a user is authorized to use the device 504 based on input from the smart card reader driver application 521. Executable code 523, 521, and 522 may be stored as separate programs as shown, or may be part of a single program, or occur in other program arrangements. Memory 526 may also store files 502 that correspond to device profiles.

Similarly, smart card reader 102 includes an antenna 510, a wireless communication interface 512, a processor 514 coupled to wireless communication interface 512, a hardware interface 511, and a memory 516 coupled to processor 514. For example, hardware interface 511 is a connector that mates to a corresponding connector with contact pins on smart card 103. Memory 516 may be fixed in or removable from smart card reader 102. Memory 516 may be embedded or partially embedded in processor 514. Memory 516 stores executable code 513 that functions as a smart card reader driver when executed by processor 514. Processor 514 and memory 516 may be part of the same integrated circuit or in separate integrated circuits. Wireless communication interface 512 comprises a radio 517 coupled to antenna 510, and a processor 518 coupled to radio 517. Wireless communication interface 512 and processor 514 may be part of the same integrated circuit or in separate integrated circuits. Communication interfaces 512 and 529 are compatible with Bluetooth® communication protocols.

A non-exhaustive list of examples for antennae 510 and 520 includes dipole antennae, monopole antennae, multilayer ceramic antennae, planar inverted-F antennae, loop antennae, shot antennae, dual antennae, omnidirectional antennae and any other suitable antennae.

A non-exhaustive list of examples for processors 514, 518, 524 and 528 includes a central processing unit (CPU), a digital signal processor (DSP), a reduced instruction set computer (RISC), a complex instruction set computer (CISC) and the like. Furthermore, processors 514, 518, 524 and 528 may be part of application specific integrated circuits (ASICs) or may be a part of application specific standard products (ASSPs).

A non-exhaustive list of examples for memories 516 and 526 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

Smart card 103 includes a hardware interface 530, a controller 532 coupled to hardware interface 530, and a memory 534 coupled to controller 532. Memory 534 stores executable code 536 which functions as a driver when executed by controller 532. Memory 534 also stores files 538 with stored personal information about the smart card's owner.

Device 504, smart card reader 102 and smart card 103 include additional components which are not shown in Figure 5 and which, for clarity, are not described herein.

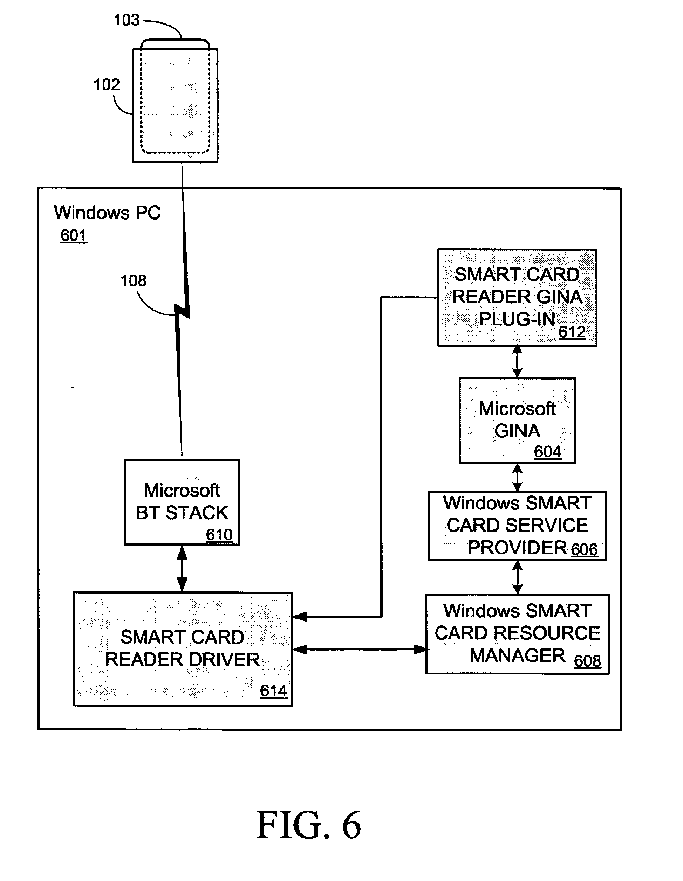

Figure 6 is a block diagram of an exemplary system 600 based on a Microsoft Windows@ operating system, according to some embodiments of the invention. Smart card reader 102 communicates with a personal computer 601 that is running Windows@ operating software. Smart card 103 is shown inserted in smart card reader 102. Software elements on the PC that are illustrated using white backgrounds are standard Windows@ elements, whereas the elements with gray backgrounds are custom written to enable the method shown in figure 2. Standard Windows@ elements include: a Microsoft@ Graphical Identification and Authentication (GINA) program 604; a Windows@ Smart Card Service Provider 606; a Windows@ Smart Card Resource Manager 608; and a Microsoft@ Bluetooth® stack 610. Additional custom-designed elements include: a Smart Card Reader GINA plug-in 612; and a Smart Card Reader Driver 614.

According to the flowchart in figure 2, at 202, GINA plug-in 612 may generate a device dialog box into which the user may input the device name, and a pairing dialog box into which the user may input information that identifies the device, such as a Bluetooth® address, and a secret from the device. Alternatively, a different arrangement of dialog boxes, or some other manner of user interface may be used to allow the pairing information to be entered without unlocking the PC. At 208, GINA plug-in 612 and Smart Card Reader Driver 614 establish a connection with SCR 102. At 210, when a Windows@ login is attempted, Microsoft@ GINA 604 prompts for the smart card PIN. Microsoft@ GINA 604 sends the PIN to Windows Smart Card Service Provider 606, to Windows Smart Card Resource Manager 608, to Smart Card Reader Driver 614. Smart Card Reader Driver 614 packages the PIN in a command, encrypts the command and sends the encrypted package to the Bluetooth® stack 610, through which it is forwarded to smart card reader 102.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method in a first device (404), the method comprising:
providing a pairing interface on the first device (404), while the first device (404) remains locked, to obtain pairing information about a second device (401) with which the first device (404) does not currently have a wireless connection;
establishing a wireless connection between the first device (404) and the second device (401) using the pairing information;
communicating with the second device (401) over the wireless connection to authenticate the identity of a user of the first device (404);
unlocking the first device (404) if the user is authenticated as an authorized user of the first device (404); and
if the first device (404) is unlocked by the authorized user within a predetermined time interval after the connection is established, storing in a device profile on the first device (404) at least a portion of the pairing information about the second device (401).

2. The method of claim 1, wherein establishing the wireless connection comprises:
generating pairing keys using the pairing information; and
establishing the wireless connection using the pairing keys.

3. The method of claim 1 or claim 2, further comprising:
labeling the device profile with a personal identifier that identifies the authorized user.

4. The method of claim 3, further comprising:
if the first device (404) is subsequently locked and the personal identifier is provided via a user interface in the first device (404) while the first device (404) remains locked, retrieving the stored pairing information from the device profile and establishing a new wireless connection between the first device (404) and the second device (401) using the retrieved pairing information.

5. The method of claim 1, further comprising:
if the first device is subsequently locked and a secret is provided via a user interface in the first device while the first device remains locked, retrieving the stored pairing information from the device profile and establishing a new wireless connection between the first device and the second device using the retrieved pairing information,
wherein the secret is used to access authentication capabilities of the second device.

6. A computer-readable medium having computer-executable instructions for causing a computing device or system to perform the method of any one of claims 1 to 5.

7. A first device (404), comprising:
a memory (426);
a processor coupled to the memory (424); and
a wireless communication interface (429) coupled to the processor (424) through which the first device (404) is able to communicate with a second device (401) that is used to authenticate users of the first device (404),
wherein the memory (426) is able to store executable code means (423), which, when executed by the processor (424), is arranged to provide a pairing interface that allows users to provide pairing information about the second device (401) while the first device (404) remains locked, and is arranged to establish a wireless connection between the two devices using the pairing information, and is arranged to wirelessly communicate with the second device (401) to authenticate the identity of a user, and to unlock the first device (404) if the user is authenticated as an authorized user of the first device (404), and is arranged, upon completion of a successful login to the first device (404) within a predetermined time interval after the connection is established, to store at least a portion of the pairing information about the second device (401) in a device profile in the memory (426).

8. The first device (404) of claim 7, further comprising:
a display (406),
wherein the pairing interface comprises at least one dialog box displayed on the display (406).

9. The first device (404) of claim 7 or claim 8, wherein the code, when executed by the processor, additionally labels the device profile with a personal identifier belonging to the authorized user.

10. The first device (404) of claim 9, wherein the executable code means (421), when executed by the processor (424), is arranged to retrieve pairing information from a device profile that is labeled with a personal identifier entered by a user in the pairing interface while the first device is locked, if such a device profile exists, in order to establish a wireless communication link with the device identified therein.

11. The first device (404) of claim 7, wherein the code, when executed by the processor, retrieves pairing information from the device profile, in order to establish a wireless communication link with the device identified therein.

12. A system for pairing two wireless-enabled devices, comprising:
a first wireless-enabled device (404) able to be unlocked by authorized users; and
a second wireless-enabled device (401) able to communicate wirelessly with the first device (404) to provide personal authentication of the users once a wireless connection with the first device (404) has been established,
wherein the first device (404) is arranged to provide a pairing interface to obtain pairing information about the second device (401) while the first device (404) remains locked, and wherein the first device (404) and the second device (401) are arranged to establish a wireless connection therebetween using the pairing information, and
wherein if the first device (404) is unlocked by an authorized user within a predetermined time interval after the connection is established, the first device (404) is arranged to store in a device profile on the first device (404) at least a portion of the pairing information about the second device (401).

13. The system of claim 12, wherein the first device (404) is to additionally label the device profile with a personal identifier that identifies the authorized user.

14. The system of claim 12, wherein if the first device (404) is subsequently locked and the personal identifier is provided via a user interface in the first device (404) while the first device (404) remains locked, the first device (404) is to retrieve the stored pairing information from the device profile and to establish a new wireless connection with the second device (401) using the retrieved pairing information.

15. The system of claim 12, wherein if the first device (404) is subsequently locked and a secret is provided via a user interface in the first device (404) while the first device (404) remains locked, the first device (404) is to retrieve the stored pairing information from the device profile and to establish a new wireless connection with the second device (401) using the retrieved pairing information, wherein the secret is used to access authentication capabilities of the second device (401).

16. The system of any one of claims 12 to 15, wherein the second device (401) comprises a smart card reader.

17. The system of any one of claims 12 to 16, wherein the first device (404) is a personal computer.

## Patentansprüche

1. Verfahren in einer ersten Vorrichtung (404), wobei das Verfahren aufweist:
Vorsehen einer Verbindungsschnittstelle auf der ersten Vorrichtung (404), während die erste Vorrichtung (404) gesperrt bleibt, um eine Verbindungs- bzw. Zuordnungs(pairing)information über eine zweite Vorrichtung (401) zu erlangen, mit der die erste Vorrichtung (404) momentan keine drahtlose Verbindung hat;
Herstellen einer drahtlosen Verbindung zwischen der ersten Vorrichtung (404) und der zweiten Vorrichtung (401) unter Verwendung der Zuordnungsinformation;
Kommunizieren mit der zweiten Vorrichtung (401) über die drahtlose Verbindung, um die Identität eines Benutzers der ersten Vorrichtung (404) zu authentisieren;
Entsperren der ersten Vorrichtung (404), wenn der Benutzer authentisiert ist als ein autorisierter Benutzer der ersten Vorrichtung (404); und
wenn die erste Vorrichtung (404) durch den autorisierten Benutzer innerhalb eines vorgegebenen Zeitintervalls entsperrt ist, nachdem die Verbindung hergestellt ist, Speichern zumindest eines Teils der Zuordnungsinformation über die zweite Vorrichtung (401) in einem Vorrichtungsprofil auf der ersten Vorrichtung (404).

2. Verfahren gemäß Anspruch 1, wobei ein Herstellen der drahtlosen Verbindung aufweist:
Erzeugen von Zuordnungsschlüsseln unter Verwendung der Zuordnungsinformation; und
Herstellen der drahtlosen Verbindung unter Verwendung der Zuordnungsschlüssel.

3. Verfahren gemäß Anspruch 1 oder Anspruch 2, das weiter aufweist:
Bezeichnen des Vorrichtungsprofils mit einem persönlichen Identifizierer, der den autorisierten Benutzer identifiziert.

4. Verfahren gemäß Anspruch 3, das weiter aufweist:
wenn die erste Vorrichtung (404) nachfolgend gesperrt ist und der persönliche Identifizierer über eine Benutzerschnittstelle in der ersten Vorrichtung (404) geliefert wird, während die erste Vorrichtung (404) gesperrt bleibt, Abrufen der gespeicherten Zuordnungsinformation aus dem Vorrichtungsprofil und Herstellen einer neuen drahtlosen Verbindung zwischen der ersten Vorrichtung (404) und der zweiten Vorrichtung (401) unter Verwendung der abgerufenen Zuordnungsinformation.

5. Verfahren gemäß Anspruch 1, das weiter aufweist:
wenn die erste Vorrichtung nachfolgend gesperrt ist und ein Geheimnis über eine Benutzerschnittstelle in der ersten Vorrichtung geliefert wird, während die erste Vorrichtung gesperrt bleibt, Abrufen der gespeicherten Zuordnungsinformation aus dem Vorrichtungsprofil und Herstellen einer neuen drahtlosen Verbindung zwischen der ersten Vorrichtung und der zweiten Vorrichtung unter Verwendung der abgerufenen Zuordnungsinformation, wobei das Geheimnis verwendet wird, um auf Authentisierungsfähigkeiten der zweiten Vorrichtung zuzugreifen.

6. Computer-lesbares Medium mit Computer-ausführbaren Anweisungen, um eine Computervorrichtung oder ein System zu veranlassen, das Verfahren gemäß einem der Ansprüche 1 bis 5 durchzuführen.

7. Erste Vorrichtung (404), die aufweist:
einen Speicher (426);
einen Prozessor, der mit dem Speicher (424) verbunden ist; und
eine drahtlose Kommunikationsschnittstelle (429), die mit dem Prozessor (424) verbunden ist, über welche die erste Vorrichtung (404) mit einer zweiten Vorrichtung (401) kommunizieren kann, die verwendet wird, um Benutzer der ersten Vorrichtung (404) zu authentisieren,
wobei der Speicher (426) ein ausführbares Codemittel (423) speichern kann, das, bei Ausführung durch den Prozessor (424), ausgebildet ist, eine Zuordnungsschnittstelle vorzusehen, die Benutzern ermöglicht, eine Zuordnungsinformation über die zweite Vorrichtung (401) zu liefern, während die erste Vorrichtung (404) gesperrt bleibt, und ausgebildet ist, eine drahtlose Verbindung zwischen den zwei Vorrichtungen unter Verwendung der Zuordnungsinformation herzustellen, und ausgebildet ist, mit der zweiten Vorrichtung (401) drahtlos zu kommunizieren, um die Identität eines Benutzers zu identifizieren, und die erste Vorrichtung (404) zu entsperren, wenn der Benutzer als ein autorisierter Benutzer der ersten Vorrichtung (404) authentisiert ist, und ausgebildet ist, bei Abschluss einer erfolgreichen Anmeldung an der ersten Vorrichtung (404) innerhalb eines vorgegebenen Zeitintervalls, nachdem die Verbindung hergestellt ist, zumindest einen Teil der Zuordnungsinformation über die zweite Vorrichtung (401) in einem Vorrichtungsprofil in dem Speicher (426) zu speichern.

8. Erste Vorrichtung (404) gemäß Anspruch 7, die aufweist:
eine Anzeige (406),
wobei die Zuordnungsschnittstelle zumindest eine Dialogbox aufweist, die auf der Anzeige (406) angezeigt wird.

9. Erste Vorrichtung (404) gemäß Anspruch 7 oder Anspruch 8, wobei der Code, bei Ausführung durch den Prozessor, zusätzlich das Vorrichtungsprofil mit einem persönlichen Identifizierer bezeichnet, der zu dem autorisierten Benutzer gehört.

10. Erste Vorrichtung (404) gemäß Anspruch 9, wobei das ausführbare Codemittel (421), bei Ausführung durch den Prozessor (424), ausgebildet ist, eine Zuordnungsinformation aus einem Vorrichtungsprofil abzurufen, das mit einem persönlichen Identifizierer bezeichnet ist, der durch einen Benutzer in die Zuordnungsschnittstelle eingegeben wird, während die erste Vorrichtung gesperrt ist, wenn ein derartiges Vorrichtungsprofil existiert, um eine drahtlose Kommunikationsverbindung mit der darin identifizierten Vorrichtung herzustellen.

11. Erste Vorrichtung (404) gemäß Anspruch 7, wobei der Code, bei Ausführung durch den Prozessor, eine Zuordnungsinformation aus dem Vorrichtungsprofil abruft, um eine drahtlose Kommunikationsverbindung mit der darin identifizierten Vorrichtung herzustellen.

12. System zum Zuordnen von zwei drahtlos-aktivierten Vorrichtungen, das aufweist:
eine erste drahtlos-aktivierte Vorrichtung (404), die durch autorisierte Benutzer entsperrt werden kann; und
eine zweite drahtlos-aktivierte Vorrichtung (401), die drahtlos mit der ersten Vorrichtung (404) kommunizieren kann, um eine persönliche Authentisierung der Benutzer zu liefern, sobald eine drahtlose Verbindung mit der ersten Vorrichtung (404) hergestellt wurde,
wobei die erste Vorrichtung (404) ausgebildet ist, eine Verbindungsschnittstelle vorzusehen, um eine Zuordnungsinformation über die zweite Vorrichtung (401) zu erlangen, während die erste Vorrichtung (404) gesperrt bleibt, und wobei die erste Vorrichtung (404) und die zweite Vorrichtung (401) ausgebildet sind, eine drahtlose Verbindung dazwischen unter Verwendung der Zuordnungsinformation herzustellen, und
wobei, wenn die erste Vorrichtung (404) durch einen autorisieren Benutzer innerhalb eines vorgegebenen Zeitintervalls entsperrt wird, nachdem die Verbindung hergestellt ist, die erste Vorrichtung (404) ausgebildet ist, zumindest einen Teil der Zuordnungsinformation über die zweite Vorrichtung (401) in einem Vorrichtungsprofil auf der ersten Vorrichtung (404) zu speichern.

13. System gemäß Anspruch 12, wobei die erste Vorrichtung (404) vorgesehen ist, zusätzlich das Vorrichtungsprofil mit einem persönlichen Identifizierer zu bezeichnen, der den autorisierten Benutzer identifiziert.

14. System gemäß Anspruch 12, wobei, wenn die erste Vorrichtung (404) nachfolgend gesperrt ist und der persönliche Identifizierer über eine Benutzerschnittstelle in der ersten Vorrichtung (404) geliefert wird, während die erste Vorrichtung (404) gesperrt bleibt, die erste Vorrichtung (404) vorgesehen ist, die gespeicherte Zuordnungsinformation aus dem Vorrichtungsprofil abzurufen und eine neue drahtlose Verbindung mit der zweiten Vorrichtung (401) unter Verwendung der abgerufenen Zuordnungsinformation herzustellen.

15. System gemäß Anspruch 12, wobei, wenn die erste Vorrichtung (404) nachfolgend gesperrt ist und ein Geheimnis über eine Benutzerschnittstelle in der ersten Vorrichtung (404) geliefert wird, während die erste Vorrichtung (404) gesperrt bleibt, die erste Vorrichtung (404) vorgesehen ist, die gespeicherte Zuordnungsinformation aus dem Vorrichtungsprofil abzurufen und eine neue drahtlose Verbindung mit der zweiten Vorrichtung (401) herzustellen unter Verwendung der abgerufenen Zuordnungsinformation, wobei das Geheimnis verwendet wird, um auf Authentisierungsfähigkeiten der zweiten Vorrichtung (401) zuzugreifen.

16. System gemäß einem der Ansprüche 12 bis 15, wobei die zweite Vorrichtung (401) einen Smartcard-Leser aufweist.

17. System gemäß einem der Ansprüche 12 bis 16, wobei die erste Vorrichtung (404) ein Personalcomputer ist.

## Revendications

1. Procédé sur un premier dispositif (404), le procédé comprenant les étapes consistant à :
fournir une interface d'appariement sur le premier dispositif (404), alors que le premier dispositif (404) reste verrouillé, afin d'obtenir des informations d'appariement sur un second dispositif (401) avec lequel le premier dispositif (404) ne possède pas de connexion sans fil courante ;
établir une connexion sans fil entre le premier dispositif (404) et le second dispositif (401) à l'aide des informations d'appariement ;
communiquer avec le second dispositif (401) sur la connexion sans fil afin d'authentifier l'identité d'un utilisateur du premier dispositif (404) ;
déverrouiller le premier dispositif (404) si l'utilisateur est authentifié comme utilisateur autorisé du premier dispositif (404) ; et
si le premier dispositif (404) est déverrouillé par l'utilisateur autorisé dans un intervalle de temps prédéterminé après l'établissement de la connexion, stocker dans un profil de dispositif sur le premier dispositif (404) au moins une portion des informations d'appariement intéressant le second dispositif (401).

2. Procédé selon la revendication 1, dans lequel l'établissement de la connexion sans fil comprend les étapes consistant à :
produire des clefs d'appariement à l'aide des informations d'appariement ; et
établir la connexion sans fil à l'aide des clefs d'appariement.

3. Procédé selon la revendication 1 ou la revendication 2, comprenant en outre l'étape consistant à :
étiqueter le profil de dispositif à l'aide d'un identificateur personnel qui identifie l'utilisateur autorisé.

4. Procédé selon la revendication 3, comprenant en outre les étapes consistant à :
si le premier dispositif (404) est ensuite verrouillé et si l'identificateur personnel est fourni via une interface utilisateur du premier dispositif (404) alors que le premier dispositif (404) reste verrouillé, obtenir les informations d'appariement stockées dans le profil de dispositif et établir une nouvelle connexion sans fil entre le premier dispositif (404) et le second dispositif (401) à l'aide des informations d'appariement obtenues.

5. Procédé selon la revendication 1, comprenant en outre les étapes consistant à :
si le premier dispositif est ensuite verrouillé et si un secret est fourni via une interface utilisateur du premier dispositif alors que le premier dispositif reste verrouillé, obtenir les informations d'appariement stockées dans le profil de dispositif et établir une nouvelle connexion sans fil entre le premier dispositif et le second dispositif à l'aide des informations d'appariement obtenues, le secret étant utilisé pour accéder aux capacités d'authentification du second dispositif.

6. Support lisible par ordinateur, portant des instructions exécutables par ordinateur pour commander à un dispositif ou système informatique d'exécuter le procédé selon l'une quelconque des revendications 1 à 5.

7. Premier dispositif (404), comprenant :
une mémoire (426) ;
un processeur (424) couplé à la mémoire ; et
une interface de communication sans fil (429) couplée au processeur (424), grâce à laquelle le premier dispositif (404) est en mesure de communiquer avec un second dispositif (401) qui est utilisé pour authentifier des utilisateurs du premier dispositif (404) ;
dans lequel la mémoire (426) est en mesure de stocker un moyen de code exécutable (423) qui, lorsqu'il est exécuté par le processeur (424), est conçu pour fournir une interface d'appariement qui permet à des utilisateurs de fournir des informations d'appariement portant sur le second dispositif (401), alors que le premier dispositif (404) reste verrouillé, est conçu pour établir une connexion sans fil entre les deux dispositifs à l'aide des informations d'appariement, est conçu pour communiquer avec le second dispositif (401) sur la connexion sans fil afin d'authentifier l'identité d'un utilisateur et pour déverrouiller le premier dispositif (404) si l'utilisateur est authentifié comme utilisateur autorisé du premier dispositif (404) et est conçu, après réussite de l'ouverture d'une session sur le premier dispositif (404) dans un intervalle de temps prédéterminé après l'établissement de la connexion, pour stocker dans un profil de dispositif dans la mémoire (426) au moins une portion des informations d'appariement intéressant le second dispositif (401).

8. Premier dispositif (404) selon la revendication 7, comprenant en outre :
un écran d'affichage (406) ;
dans lequel l'interface d'appariement comprend au moins une boîte de dialogue affichée sur l'écran d'affichage (406).

9. Premier dispositif (404) selon la revendication 7 ou la revendication 8, dans lequel le code, lorsqu'il est exécuté par le processeur, étiquette en outre le profil de dispositif à l'aide d'un identificateur personnel appartenant à l'utilisateur autorisé.

10. Premier dispositif (404) selon la revendication 9,
dans lequel le moyen de code exécutable (421), lorsqu'il est exécuté par le processeur (424), est conçu pour obtenir des informations d'appariement dans un profil de dispositif qui est étiqueté à l'aide d'un identificateur personnel saisi par un utilisateur dans l'interface d'appariement alors que le premier dispositif est verrouillé, si un tel profil de dispositif existe, afin d'établir une liaison de communication sans fil avec le dispositif qui y est identifié.

11. Premier dispositif (404) selon la revendication 7,
dans lequel le code, lorsqu'il est exécuté par le processeur, obtient des informations d'appariement dans le profil de dispositif, afin d'établir une liaison de communication sans fil avec le dispositif qui y est identifié.

12. Système d'appariement de deux dispositifs possédant des fonctions de communication sans fil, comprenant :
un premier dispositif possédant des fonctions de communication sans fil (404), en mesure d'être déverrouillé par des utilisateurs autorisés ; et
un second dispositif possédant des fonctions de communication sans fil (401), en mesure de communiquer sans fil avec le premier dispositif (404) pour fournir une authentification personnelles des utilisateurs après qu'une connexion sans fil a été établie avec le premier dispositif (404) ;
dans lequel le premier dispositif (404) est conçu pour fournir une interface d'appariement destinée à obtenir des informations d'appariement sur le second dispositif (401), alors que le premier dispositif (404) reste verrouillé, et dans lequel le premier dispositif (404) et le second dispositif (401) sont conçus pour établir une connexion sans fil entre eux à l'aide des informations d'appariement ; et
dans lequel, si le premier dispositif (404) est déverrouillé par un utilisateur autorisé dans un intervalle de temps prédéterminé après l'établissement de la connexion, le premier dispositif (404) est conçu pour stocker dans un profil de dispositif sur le premier dispositif (404) au moins une portion des informations d'appariement intéressant le second dispositif (401).

13. Système selon la revendication 12, dans lequel le premier dispositif (404) doit en outre étiqueter le profil de dispositif à l'aide d'un identificateur personnel qui identifie l'utilisateur autorisé.

14. Système selon la revendication 12, dans lequel, si le premier dispositif (404) est ensuite verrouillé et si l'identificateur personnel est fourni via une interface utilisateur du premier dispositif (404) alors que le premier dispositif (404) reste verrouillé, le premier dispositif (404) doit obtenir les informations d'appariement stockées dans le profil de dispositif et établir une nouvelle connexion sans fil avec le second dispositif (401) à l'aide des informations d'appariement obtenues.

15. Système selon la revendication 12, dans lequel, si le premier dispositif (404) est ensuite verrouillé et si un secret est fourni via une interface utilisateur sur le premier dispositif (404) alors que le premier dispositif (404) reste verrouillé, le premier dispositif (404) doit obtenir les informations d'appariement stockées dans le profil de dispositif et établir une nouvelle connexion sans fil avec le second dispositif (401) à l'aide des informations d'appariement obtenues, le secret étant utilisé pour accéder à des capacités d'authentification du second dispositif (401).

16. Système selon l'une quelconque des revendications 12 à 15, dans lequel le second dispositif (401) comprend un lecteur de carte à puce.

17. Système selon l'une quelconque des revendications 12 à 16, dans lequel le premier dispositif (404) est un ordinateur personnel.
